# EUROPEAN PATENT SPECIFICATION

(11) **EP 1 209 408 B1**
(45) Date of publication and mention of the grant of the patent: **29.12.2004**
(21) Application number: 01500268.6
(22) Date of filing: 13.11.2001
(51) Int. Cl.: F17C 13/04, F23N 5/10

(54) **Valve device for bottles of liquefied gas**
Ventilvorrichtung für Flüssiggasbehälter
Système de soupape pour bouteilles à gaz liquéfié

(30) Priority: 22.11.2000 ES 200002849 U
(43) Date of publication of application: 29.05.2002
(73) Proprietor: Butsir C.E., S.A., 08850-Gava (Barcelona) (ES)
(72) Inventor: Pascual Barrachina, Juan, 08021 Barcelona (ES)
(74) Representative: Curell Aguilà, Marcelino

(56) References cited:
- EP-A- 0 275 242
- DE-A- 3 345 561
- FR-A- 1 143 276
- FR-A- 2 050 851
- FR-A- 2 440 579

## Description

### Field of the Invention

The present invention relates to a valve device for bottles of liquefied gas, especially for use with the bottles that are directly attached to a gas consumer appliance, such as a stove, a gas-ring, a lamp or the like, and which is provided with means for adapting the pressure of the gas in the bottle to the pressure at which the appliance consumes the gas.

### Prior Art

At the present time, the fitting of one of the above gas consumer appliances to the liquefied gas bottle requires the use of a flow regulator valve provided with a threaded coupling to the neck of the bottle and with threaded means for coupling to a pressure reducer, which, in turn, requires threaded means for coupling to a safety valve which should also be provided with threaded coupling means to the consumer appliance.

As an example of prior art, document FR-A-2440579 discloses a valve device for bottles of liquefied gas having means of adapting the pressure of the gas in the bottle to the pressure at which a consumer appliance consumes the gas. The gas device is formed by a monoblock unit including a valve for regulating the incoming flow of the gas at high pressure from the bottle, a pressure reducer or reducer of said high pressure of the gas to the pressure of consumption thereof, a safety valve for no-flame situations, an upper coupling to the consumer appliance and a lower coupling to the filler mouth of the bottles. Also documents FR-A-1143276 and EP-A2-0275242 disclose a monoblock valve device for bottles of liquefied gas, comprising a shut-off valve, a pressure reducer and a safety valve.

This foregoing arrangement involves a substantial assembly time, a larger volume of material necessary for the intermediate couplings and a plurality of seals to be located between said intermediate couplings.

All of this gives rise to equipment liable to multiple points of gas leaks that, further to the cost of assembly and material, make such equipment not very reliable and prone to cause accidents.

### Summary of the Invention

With the purpose of avoiding such drawbacks, the solution has been adopted of gathering all the previously mentioned devices into a single monoblock unit.

According to the foregoing solution, the valve device of the invention has been developed, which is formed by a monoblock unit including a valve for regulating the incoming flow of gas at high pressure from the bottle, a pressure reducer or reducer of the said high pressure of the gas to the pressure of use thereof, a safety valve for no-flame situations, a coupling to the consumer appliance and a coupling to the filler mouth of the bottle.

A feature of the invention consists of the coupling to the filler mouth of the bottle, the fixed portion of the flow regulator valve and a first portion of the pressure reducer subjected to pressure being formed in a single second body member, while a second portion of the pressure reducer in communication with the atmosphere, the fixed portion of the safety valve and the coupling for the consumer appliance are formed in a single first body member, the association of said first and second body members forming a monoblock unit that may not be taken apart once the body members have been coupled together.

Another feature of the invention is that the gas flow regulator valve, which is of the needle valve type, comprises a small-sized enclosure through which the needle of the valve passes and having a wall in the centre of which there is open a passage in communication with the high pressure gas in the bottle and which has a valve seat for said needle and in which there is open an offset passage that debouches in the pressure chamber of the pressure reducer through a rocking stopper member.

It is also a feature of the invention that a pressure chamber of the pressure reducer, formed in the second body member of the device and an flexible diaphragm inserted therein, is in communication with the safety valve by means of a moving pin having an axial bore that is associated at one end with the flexible diaphragm and the rocking stopper member.

The invention contemplates as features that the moving pin associated at one end with the rocking stopper member, is associated at the other end thereof with a tube of the safety valve wherein it slides in O-rings, or with the centre of a second flexible diaphragm that, fixed around the perimeter thereof in the second portion of the pressure reducer, forms a chamber for the gas at the pressure of use which is in communication with an inlet of the safety valve.

Similarly, the invention also contemplates that the association of the moving pin with the rocking stopper member is achieved by way of a support arrangement formed by a hemi-spherical button of the stopper member and an application surface thereof, the latter being formed in a attachment washer of the moving pin to the flexible diaphragm, or by means of a joint formed by a throat of the former and a forked gap of the latter.

Finally, the invention contemplates that the safety valve is one of the type having a gas outlet for supplying a pilot burner, the flame of which is applied to the bulb of a thermocouple connected to the electromagnet acting on the stopper member of said valve.

### Brief Description of the Drawings

To facilitate the understanding of the foregoing ideas, there is described hereinbelow the object of the invention, with reference to the accompanying illustrative drawings, in which:
Figure 1 is a perspective view of a valve device for bottles of liquefied gas according to the invention.
Figure 2 is a view, partly in cross section, of the device of Figure 1 along the line II-II of a diametrical plane thereof.
Figure 3 is a cross section view of a detail of a variant of the arrangement of the gas flow from the pressure reducer to the safety valve that is different from the one contemplated in Figure 2.
Figure 4 is a cross section view along the line IV-IV of Figure 1 of the upper portion of the device of the invention.
Figure 5 is a cross section view of a detail of the sealing chamber with the needle seat hole of the gas flow regulation valve and of the gas passage to the stopper member of the pressure reducer.
Figure 6 is a view along the line VI-VI of Figure 3.

### Detailed Description of the Invention

According to the invention, the valve device for liquefied gas bottle is formed by a monoblock unit formed by a first body member 1A and a second body member 1B that once coupled together form a monoblock unit that cannot be taken apart.

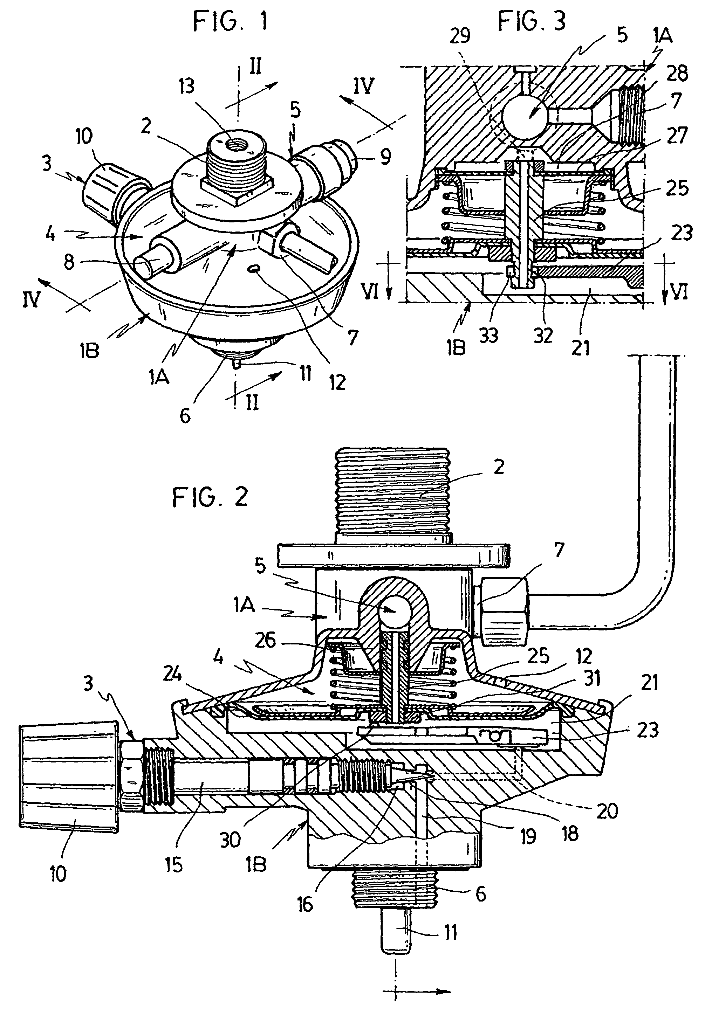

The valve device, as shown in Figure 1, incorporates in the first body member 1A and the second body member 1B of the monoblock unit, an upper coupling 2 for the consumer appliance, a flow regulator valve 3, a pressure reducer 4, a safety valve 5 and an lower coupling 6 to the filler mouth of the bottle.

Figure 1 also shows the gas outlet 7 for the pilot burner, the push button 8 for activation of the safety valve 5, the connection 9 for the thermocouple of said safety valve 5, the control knob 10 of the flow regulator valve 3 and the release pin 11 that acts on the automatic closing valve of the liquefied gas bottle.

As may be seen in Figure 1, the lower coupling 6 to the filler mouth of the bottle, the fixed portion of the flow regulator valve 3 and a first portion under pressure of the pressure reducer 4 are formed in the second body member 1B, while a second portion of the pressure reducer 4 in communication with the atmosphere through the hole 12, the fixed portion of the safety valve 5 and the upper coupling 2 for the consumer appliance are formed in the first body member 1A.

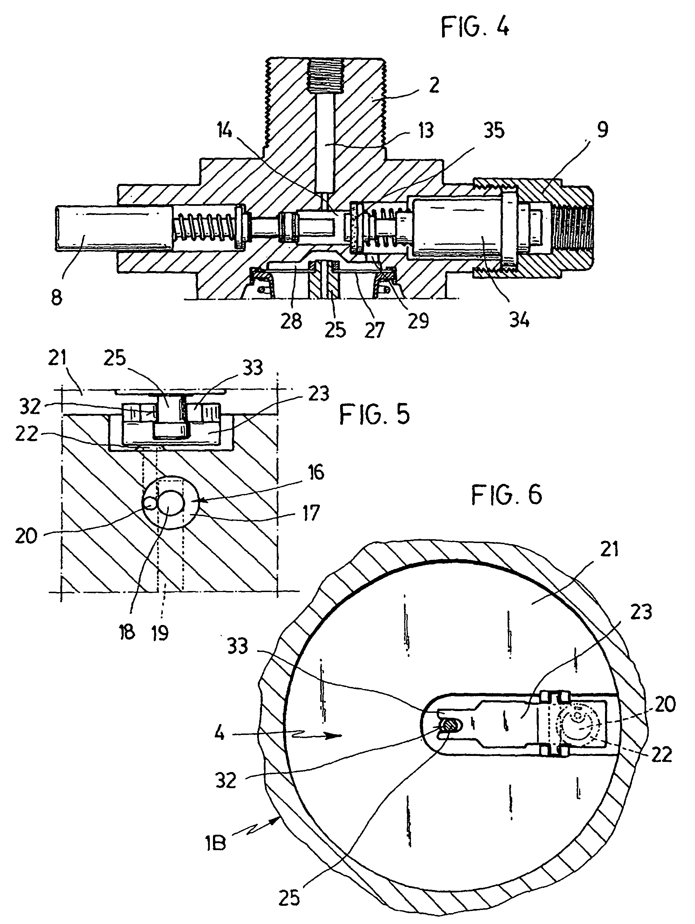

The upper coupling 2 is formed by a short threaded neck of the first body member 1A having an axial passage 13, as may be seen in Figures 1 and 4, which extends to the stopping chamber 14 of the safety valve 5 and the port thereof is threaded for the installation of the corresponding jet.

The gas flow regulator valve 3, which is of the needle valve type 15, comprises a small-sized stopping enclosure 16 through which the needle of the valve 15 passes and having a wall 17, see Figure 5, in the centre of which there is open a passage 18 in communication with the passage 19 carrying the high pressure gas from the bottle and which has a valve seat for said needle 15 and in which there is open an offset passage 20 that debouches in the pressure chamber 21 of the pressure reducer 4 through a rocking stopper member 23.

The pressure chamber 21 of the pressure reducer 4, formed in the second body member 1B of the device and an flexible diaphragm 24 inserted between the first body member 1A and said second body member 1B, is in communication with the safety valve by means of a moving pin 25 having an axial bore and which is associated with said flexible diaphragm 24 and the rocking stopper member 23 at one end, while at the other end it is associated with a tube 26 of the safety valve 5 in which it slides in 0-rings.

According to another embodiment, see Figure 3, the moving pin 25 associated at one end with the rocking stopper member 23, is associated at the other end thereof with the centre of a second flexible diaphragm 27 that, fixed around the perimeter thereof in the second portion of the pressure reducer 4, forms a chamber 28 for the gas at the pressure of use in communication with the gas inlet 29 of the safety valve 5.

The association between the moving pin 25 and the rocking stopper member 23 is formed, in Figure 2, by a support arrangement formed by a hemi-spherical button 30 of the rocking stopper member 23 and an application surface formed by a washer 31 attaching the moving pin 25 to the flexible diaphragm 24. In another case, shown in Figure 3, said association is achieved by means of a throat 32 of the moving pin 25 and a forked gap 33 of the rocking stopper member 23.

In the example shown in the drawings, the safety valve 5 is of the type having a gas outlet 7 for supplying a pilot burner, the flame of which is applied to the bulb of a thermocouple connected to the electromagnet 34 that acts on the stopper 35 of said safety valve 5, so that, when retaining the stopper, it allows the gas at the pressure of use of the chamber 28 to flow to the axial passage 13 and, when releasing the stopper, it cuts off said flow, thereby preventing the flow of unburnt gas.

## Claims

1. A valve device for bottles of liquefied gas having means for adapting the pressure of the gas in the bottle to the pressure at which a consumer appliance consumes the gas, said valve device formed by a monoblock unit including a valve (3) for regulating the incoming flow of the gas at high pressure from the bottle, a pressure reducer (4) or reducer of the said high pressure of the gas to the pressure of consumption thereof, a safety valve (5) for no-flame situations, an upper coupling (2) to the consumer appliance and a lower coupling (6) to the filler mouth of the bottle, **characterized in that** the lower coupling (6) to the filler mouth of the bottle, the fixed portion of the flow regulator valve (3) and a first portion of the pressure reducer (4) subjected to pressure are formed in a single second body member (1 B), while a second portion of the pressure reducer (4) in communication with the atmosphere, the fixed portion of the safety valve (5) and the upper coupling (2) for the consumer appliance are formed in a single first body member (1A), the association of said first and second body members (1A, 1B) forming a monoblock unit that may not be taken apart once the body members have been coupled together.

2. The device according to claim 1, **characterized in that** the gas flow regulator valve (3), which is of the needle valve type, comprises a small-sized enclosure (16) through which the needle of the valve (15) passes and has a wall (17) in the centre of which there is open a passage (18) in communication with the high pressure gas in the bottle and which has a valve seat for said needle and in which there is open an offset passage (20) that debouches in a pressure chamber (21) of the pressure reducer (4) through a rocking stopper member (23).

3. The device according to claim 2, **characterized in that** a pressure chamber (21) of the pressure reducer (4), formed in the second body member (1B) of the device and an flexible diaphragm (24) inserted between the first body member (1A) and the second body member (1B) is in communication with the safety valve by means of an axially perforated moving pin (25) that is associated at one end with the flexible diaphragm (24) and the rocking stopper member (23).

4. The device according to claim 3, **characterized in that** the moving pin (25) associated at one end with the rocking stopper member (23) is associated at the other end thereof with a tube (26) of the safety valve (5) wherein it slides in O-rings.

5. The device according to claim 3, **characterized in that** the moving pin (25) associated at one end with the rocking stopper member (23), is associated at the other end thereof with the centre of a second flexible diaphragm (27) that, fixed around the perimeter thereof in the second portion of the pressure reducer (4), forms a chamber (28) for the gas at the pressure of use which is in communication with an inlet (29) of the safety valve (5).

6. The device according to claim 3, characterized that the association of the moving pin (25) with the rocking stopper member (23) is achieved by way of a support arrangement formed by a hemi-spherical button (30) of the stopper member (23) and an application surface thereof, the latter being formed in a attachment washer (31) of the moving pin (25) to the flexible diaphragm (24).

7. The device according to claim 3, **characterized in that** the association of the moving pin (25) with the rocking stopper member (23) is achieved by means of a joint formed by a throat (32) of the moving pin (25) and a forked gap (33) of the rocking stopper member (23).

8. The device according to claim 1, **characterized in that** the safety valve (5) is the type having a gas outlet (7) for supplying a pilot burner, the flame of which is applied to the bulb from a thermocouple connected to an electromagnet (34) acting on a stopper (35) of said safety valve (5).

9. Use of a device according to at least one of claims 1 to 8, in bottles that are directly connected to a consumer appliance of the gas,

10. Use according to claim 9, **characterized in that** said gas consumer appliance is of the group formed by a stove, a gas ring, and a lamp.

## Patentansprüche

1. Ventilvorrichtung für Flüssiggasflaschen, welche Mittel zur Anpassung des Gasdrucks in der Flasche an den Druck aufweist, unter welchem eine Verbrauchervorrichtung das Gas verbraucht, wobei die Ventilvorrichtung durch eine Monoblockeinheit gebildet wird, welche ein Ventil (3) zur Regulierung der eintreffenden Strömung des Gases unter hohem Druck aus der Flasche beinhaltet, einen Druckminderer (4) oder Minderer des Hochdrucks des Gases nach dem Verbrauchsdruck davon, ein Sicherheitsventil (5) für Nicht-Flamm-Situationen, eine obere Kopplung (2) an das Verbrauchergerät und eine untere Kopplung (6) an die Einfüllöffnung der Flasche, **dadurch gekennzeichnet, dass** die untere Kopplung (6) an die Einfüllöffnung der Flasche, der feste Abschnitt des Durchflussregulationsventils (3) und ein erster Abschnitt des Druckminderers (4), welcher dem Druck ausgesetzt ist, in einem einzigen zweiten Körperbauteil (1B) gebildet werden, während ein zweiter Abschnitt des Druckminderers (4) in Verbindung mit der Atmosphäre, der feste Abschnitt des Sicherheitsventils (5) und die obere Kopplung (2) für das Verbrauchergerät in einem einzigen ersten Körperbauteil (1A) gebildet werden, wobei die Verbindung der ersten und zweiten Körperbauteile (1A, 1B) eine Monoblockeinheit bildet, die nicht auseinander genommen werden kann, wenn die Körperbauteile einmal miteinander verbunden wurden.

2. Vorrichtung nach Anspruch 1, **dadurch gekennzeichnet, dass** das Gasdurchflussregulierungsventil (3), welches von der Nadelventilbauart ist, ein kleinbauendes Gehäuse (16) aufweist, durch welches die Nadel des Ventils (15) durchtritt, und eine Wand (17) aufweist, in deren Zentrum es eine offene Passage (18) gibt, die in Verbindung steht mit dem Hochdruckgas in der Flasche und welche einen Ventilsitz für die Nadel aufweist, und in welcher es eine geöffnete versetzte Passage (20) gibt, welche in einer Druckkammer (21) des Druckminderers (4) durch ein kippbares Stoppbauteil (23) endet.

3. Vorrichtung nach Anspruch 2, **dadurch gekennzeichnet, dass** eine Druckkammer (21) des Druckminderers (24), welche im zweiten Körperbauteil (1B) der Vorrichtung gebildet wird und eine nachgiebige Membran (24), die zwischen dem ersten Körperbauteil (1A) und dem zweiten Körperbauteil (1B) eingefügt ist, in Verbindung mit einem Sicherheitsventil mittels eines axial perforierten beweglichen Stiftes (25) steht, welcher an einem Ende der nachgiebigen Membran (24) und dem kippbaren Stoppbauteil (23) zugeordnet ist.

4. Vorrichtung nach Anspruch 3, **dadurch gekennzeichnet, dass** der bewegliche Stift (25), der an einem Ende mit dem kippbaren Stoppbauteil (23) in Verbindung steht, an seinem anderen Ende mit einer Röhre (26) des Sicherheitsventils (5) in Verbindung steht, worin er in O-Ringen gleitet.

5. Vorrichtung nach Anspruch 3, **dadurch gekennzeichnet, dass** der bewegliche Stift (25), welcher an einem Ende dem kippbaren Stoppbauteil (23) zugeordnet ist, an seinem anderen Ende mit dem Zentrum einer zweiten nachgiebigen Membran (27) in Verbindung steht, welche um ihren Umfang herum am zweiten Abschnitt des Druckminderers (4) befestigt ist, eine Kammer (28) für das Gas unter Verwendungsdruck bildet, welches in Verbindung steht mit einem Einlass (29) des Sicherheitsventils (5).

6. Vorrichtung nach Anspruch 3, **dadurch gekennzeichnet, dass** die Zuordnung des beweglichen Stiftes (25) zu dem kippbaren Stoppbauteil (23) mittels einer Stützanordnung erreicht wird, welche durch einen halbkugelförmigen Kopf (30) des Stoppbauteils (23) und einer Anwendungsoberfläche davon gebildet wird, wobei die letztere durch eine Anbringungsbeilegscheibe (31) des beweglichen Stiftes (25) der flexiblen Membran (24) gebildet wird.

7. Vorrichtung nach Anspruch 3, **dadurch gekennzeichnet, dass** die Zuordnung des beweglichen Stiftes (25) zum kippbaren Stoppbauteil (23) durch ein Gelenk erreicht wird, welches durch eine Kehle (32) des beweglichen Stiftes (25) und einen gegabelten Spalt (33) des kippbaren Stoppbauteils (23) gebildet wird.

8. Vorrichtung nach Anspruch 1, **dadurch gekennzeichnet, dass** das Sicherheitsventil (5) von der Bauart ist, welche einen Gasauslass (7) zur Versorgung einer Zündflamme aufweist, deren Flamme auf die Birne eines Thermoelementes einwirkt, welches mit einem Elektromagneten (34) verbunden ist, der auf einen Stopper (35) des Sicherheitsventils (5) einwirkt.

9. Verwendung einer Vorrichtung von wenigstens einem der Ansprüche 1 bis 8 in Flaschen, welche direkt mit einem Verbrauchergerät für Gas verbunden ist.

10. Verwendung nach Anspruch 9, **dadurch gekennzeichnet, dass** das Verbrauchergasgerät aus der Gruppe ist, die durch einen Ofen, einen Gasring und eine Lampe gebildet wird.

## Revendications

1. Dispositif à soupape pour bouteilles de gaz liquéfié, comprenant des moyens pour adapter la pression du gaz contenue dans la bouteille à la pression à laquelle un appareil consommateur consomme le gaz, ledit dispositif à soupape étant formé d'une unité monobloc comprenant un robinet (3) servant à régler le débit entrant de gaz à haute pression issu de la bouteille, un réducteur de pression (4) ou réducteur qui ramène ladite haute pression du gaz à la pression de consommation de ce gaz, une soupape de sûreté (5) prévue pour les situations d'absence de flamme, un raccord supérieur (2) pour l'appareil consommateur et un raccord inférieur (6) pour le goulot de remplissage de la bouteille, **caractérisé en ce que** le raccord inférieur (6) pour le goulot de remplissage de la bouteille, la partie fixe du robinet de réglage du débit (3) et une première partie du réducteur de pression (4), qui est soumise à l'action de la pression, sont formés dans un unique second élément de corps (1B), tandis qu'une seconde partie du réducteur de pression (4), qui est en communication avec l'atmosphère, la partie fixe de la soupape de sûreté (5) et le raccord supérieur (2) pour l'appareil consommateur sont formés dans un unique premier élément de corps (1A), l'association des premier et second éléments de corps (1A, 1B) formant une unité monobloc qui ne peut pas être divisée une fois que les éléments de corps ont été accouplés l'un à l'autre.

2. Dispositif selon la revendication 1, **caractérisé en ce que** le robinet de réglage du débit de gaz (3), qui est du type robinet à pointeau, comprend une enceinte de petite dimension (16) à travers laquelle passe le pointeau du robinet (15) et possède une paroi (17) au centre de laquelle s'ouvre un passage (18) qui communique avec le gaz sous haute pression contenu dans la bouteille et qui a un siège d'obturation pour ledit pointeau, et dans laquelle s'ouvre un passage décalé (20) qui débouche dans une chambre de pression (21) du réducteur de pression (4) à travers un élément obturateur oscillant (23).

3. Dispositif selon la revendication 2, **caractérisé en ce qu'**une chambre de pression (21) du réducteur de pression (4), formée dans le second élément de corps (1B) du dispositif et un diaphragme flexible (24) inséré entre le premier élément de corps (1A) et le second élément de corps (1B), est en communication avec la soupape de sécurité au moyen d'une tige mobile (25) perforée axialement qui est associée au diaphragme flexible (24) et à l'élément obturateur (23) à une première extrémité.

4. Dispositif selon la revendication 3, **caractérisé en ce que** la tige mobile (25), qui est associée à une première extrémité à l'élément obturateur oscillant (23), est associée à son autre extrémité au tube (26) de la soupape de sûreté (5) dans lequel elle coulisse dans des bagues toriques.

5. Dispositif selon la revendication 3, **caractérisé en ce que** la tige mobile (25), qui est associée à une première extrémité à l'élément obturateur oscillant (23), est associée à son autre extrémité au centre d'un second diaphragme flexible (27) qui, étant fixé sur le tour de son périmètre dans la seconde partie du réducteur de pression (4), forme une chambre (28) pour le gaz à la pression d'utilisation qui est en communication avec une entrée (29) de la soupape de sûreté (5).

6. Dispositif selon la revendication 3, **caractérisé en ce que** l'association de la tige mobile (25) avec l'élément obturateur oscillant (23) est réalisée au moyen d'un dispositif de support formé d'un bouton hémisphérique (30) de l'élément obturateur (23) et d'une surface d'application de celui-ci, cette dernière étant formée dans une rondelle (31) de fixation de la tige mobile (25) au diaphragme flexible (24).

7. Dispositif selon la revendication 3, **caractérisé en ce que** l'association de la tige mobile (25) avec l'élément obturateur oscillant (23) est réalisée au moyen d'un joint formé par une gorge (32) de la tige mobile (25) et par une ouverture en forme de fourche (33) de l'élément obturateur oscillant (23).

8. Dispositif selon la revendication 1 **caractérisé en ce que** la soupape de sûreté (5) est du type possédant une sortie de gaz (7) pour alimenter un brûleur pilote dont la flamme est appliquée au bulbe d'un thermocouple relié à un électro-aimant (34) qui agit sur l'obturateur (35) de ladite soupape de sûreté (5).

9. Utilisation du dispositif selon au moins une des revendications 1 à 8, dans des bouteilles qui sont directement raccordées à un appareil consommateur de gaz.

10. Utilisation selon la revendication 9, **caractérisée en ce que** ledit appareil de consommateur de gaz appartient au groupe composé d'une cuisinière, d'une rampe circulaire et d'une lampe.
